# EUROPEAN PATENT APPLICATION

(11) **EP 2 196 904 A1**
(43) Date of publication of application: **16.06.2010**
(21) Application number: 09178570.9
(22) Date of filing: 09.12.2009
(51) Int. Cl.: G06F 9/44

(54) **Method, apparatus and system for management of application switching in an electronic device**

(30) Priority: 09.12.2008 US 121017 P; 30.03.2009 US 414282
(71) Applicant: Research In Motion Limited, Waterloo, Ontario N2L 3W8 (CA); Fat Free Mobile Inc., Waterloo, ON N2L 3W8 (CA)
(72) Inventor: Brown, Michael, William, Mississauga Ontario L4W 0B4 (CA); Kim, Sang-Heun, Mississauga, Ontario L5B 4M2 (CA); Stoev, Orlin, Vesselinov, Mississauga Ontario L4W 0B4 (CA)
(74) Representative: MERH-IP Matias Erny Reichl Hoffmann

(57) **Abstract**

A method for managing an application switcher is provided. An embodiment includes loading a plurality of web pages and associating each web page with an application switcher application, and additionally associating the application switcher application with another application. When the application switcher application is invoked, both the open web pages and the another application are available for direct selection and invocation.

## Description

### CROSS REFERENCE TO RELATED APPLICATION

The present specification claims priority form US Provisional Patent Application 61/121,017 filed December 9, 2008, the contents of which are incorporated herein by reference.

### FIELD

The present specification relates generally to communication technologies and more particularly to a method, apparatus and system for management of application switching in an electronic device.

### BACKGROUND

In a desktop browsing experience on a desktop computer, Internet traffic bandwidth, computing processing resources, and screen area are less constrained than in the computing device mini-browsing experience. As computing power of computer systems increase, modern desktop operating systems are capable of running multiple applications at once. Furthermore, one application can now run multiple instances of itself with each instance containing multiple objects rendering different content. Content can include, for example, word processing documents and web pages. Some applications open a whole new instance of the application whereas other applications open up a new rendering object of the content. One example of an application capable of the latter is the popular desktop browser called Firefox^{®} from Mozilla Foundation, 1981 Landings Drive, Building K, Mountain View, CA 94043-0801, USA. Firefox^{®} allows multiple websites to be opened within an instance of Firefox^{®} through tabs where each tab contains same or different web pages. This is also called tabbed browsing. In tabbed browsing, each tab displays the identity of its respective website.

### SUMMARY

An aspect of this specification provides a method of managing application switching in a computing device, the method comprising: loading a plurality of web pages into storage of the computing device; each of the web pages having a different web page identifier; associating, using a processor in the computing device, each web page identifier with an application switcher application maintained in the storage of the computing device; and, associating, using the processor, at least another application identifier respective to another application, with the application switcher application; invoking the application switcher application in the processor; and, generating, using the processor, each of the web page identifiers and the another application identifier.

Another aspect of this specification provides a computing device configured for application switching comprising: storage configured to maintain a web-browser application, an application switcher application and at least another application; at least one processor connected to the storage and configured to execute the web-browser application and the at least another application; the at least another application having an application identifier; a display connected to the at least one processor and configured to generate web pages via the web-browser application and to generate the at least another application; and an interface connected to the processor; the processor configured to access, via the interface, at least one web-site comprising a plurality of web pages maintained by at least one web-server; each of the web-sites having a different web page identifier; the processor configured to associate each of the web page identifiers with the application switcher application; and, the processor configured to associate the at least another application identifier with the application switcher application, such that upon invocation of the application switcher application each of the web page identifiers and the at least one another application identifier are generated on the display.

### BRIEF DESCRIPTION OF THE DRAWINGS

Figure 1 is a schematic representation of a system for management of application switching application in a computing device.
Figure 2 is a schematic representation of the client machine computing device in Figure 1.
Figure 3 shows a flow-chart depicting a method of managing an application switching application.
Figure 4 shows an example of a first web page stored on the first web server in the system of Figure 1.
Figure 5 shows an example of a second web page stored on the second web server in the system of Figure 1.
Figure 6 shows the system of Figure 1 during exemplary performance of certain blocks in the method of Figure 3.
Figure 7 shows a flow-chart depicting a method of application switching.
Figure 8 shows the display of the client machine of Figure 2 during exemplary performance of certain blocks in the method of Figure 7.
Figure 9 shows the display of the client machine of Figure 2 during exemplary performance of certain blocks in the method of Figure 7.
Figure 10 shows the display of the client machine of Figure 2 during exemplary performance of certain blocks in the method of Figure 7.
Figure 11 shows the display of the client machine of Figure 2 during exemplary performance of certain blocks in the method of Figure 7.
Figure 12 shows the display of the client machine of Figure 2 generating a menu that includes a selection for "Switch Application" as an exemplary method of instructing the processor of Figure 2 to invoke the application switching method of Figure 7.

### DETAILED DESCRIPTION OF THE EMBODIMENTS

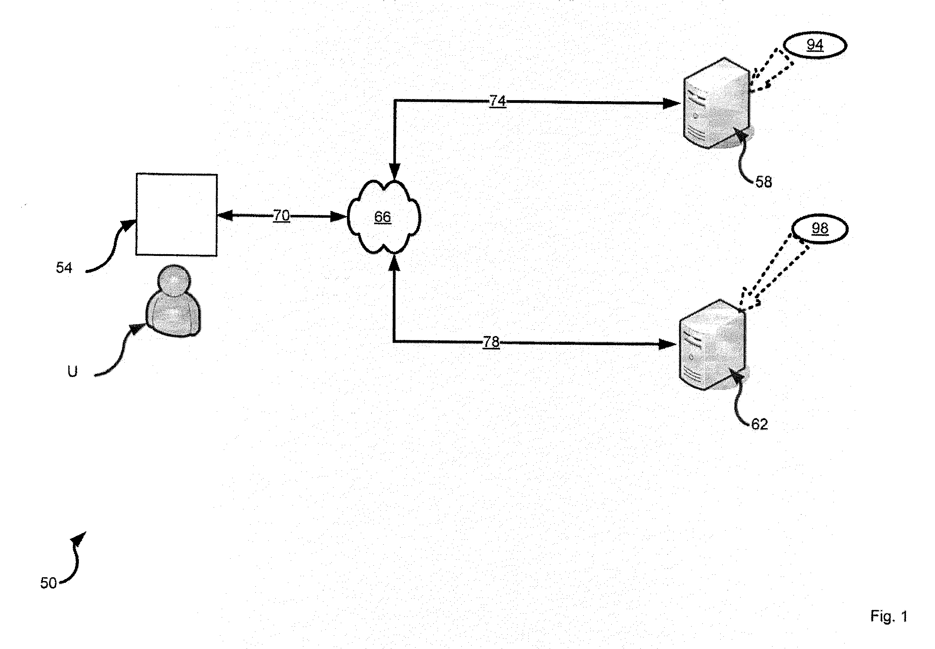

Referring to Figure 1, a system for providing interactive content on a computing device is indicated generally at 50. In a present embodiment system 50 comprises a first computing device in the form of a client machine 54 and a second computing device in the form of a web server 58, and a third computing device in the form of a second web server 62. In a present embodiment client machine 54 is a portable computing device. A network 66 interconnects each of the foregoing components. A first link 70 interconnects client machine 54 and network 66. A second link 74 interconnects server 58 and network 66. A third link interconnects server 62 and network 66.

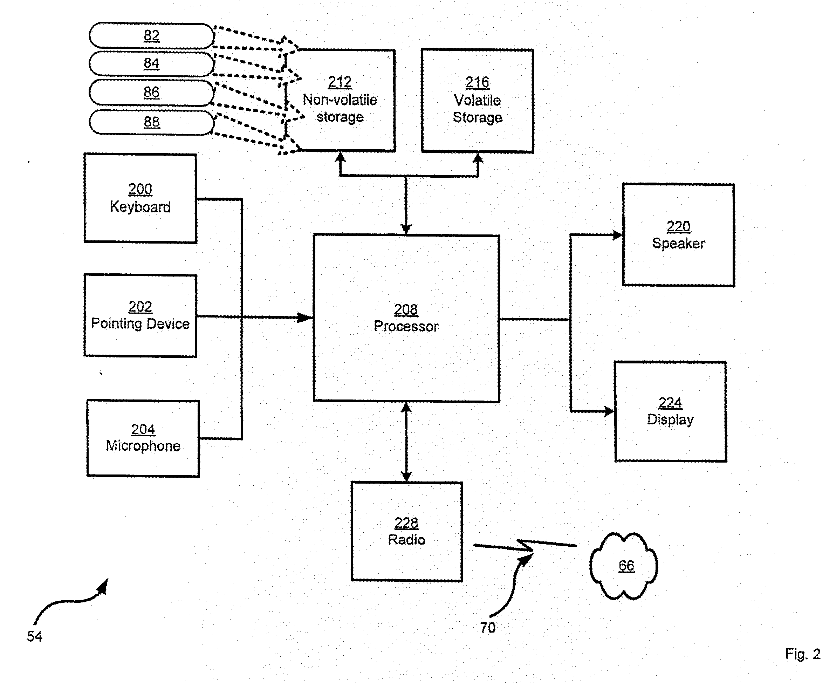

Referring briefly to Figure 2, a schematic block diagram shows an exemplary embodiment of client machine 54 in greater detail. It should be emphasized that the structure in Figure 2 is purely exemplary, and contemplates a device that may be used for both wireless voice (e.g. telephony) and wireless data (e.g. email, web browsing, text) communications. (Note that various functionalities, such as voice, e-mail, etc., may be optional according to the context of the overall desired functionality of the client machine). Client machine 54 includes a plurality of input devices which in a present embodiment includes a keyboard 200, a pointing device 202 (e.g. a trackwheel, a trackball, or a touch screen) and a microphone 204. Other input devices, such as a camera may optionally be included. Input from keyboard 200 and microphone 204 is received at a processor 208, which in turn communicates with a non-volatile storage unit 212 (e.g. read only memory ("ROM"), Erasable Electronic Programmable Read Only Memory ("EEPROM"), Flash Memory) and a volatile storage unit 216 (e.g. random access memory ("RAM")). It will now be understood by those skilled in the art that non-volatile storage unit 212 and volatile storage unit 216 are non-limiting examples of computer readable storage media. Other examples of computer readable storage media include a removable storage card that can be received in a removable storage card reader that is incorporated into client machine 54 (not shown).

Programming instructions that implement the functional teachings of client machine 54 as described herein are typically maintained, persistently, in non-volatile storage unit 212 and used by processor 208 which in turn makes appropriate utilization of volatile storage 216 during the execution of such programming instructions. Of particular note is that non-volatile storage unit 212 persistently maintains a web-browser application 82, an application switcher application 84, a telephone application 86 and a calendar application 88. Web-browser application 82, application switcher application 84, telephone application 86 and calendar application 88 can each be executed on processor 208 making use of volatile storage 216 as appropriate. Note that telephone application 86 and calendar application 88 are examples, and various other applications (not shown) can be maintained in non-volatile storage unit 212 according to the desired configuration and functioning of client machine 54.

Web-browser application 82 is configured to provide web-browser functionality on client-machine 54. Web-browser application 82 can be referred to as a mini-browser, in the sense that it is provided on client machine 54 which may have a form factor that is "miniaturized", at least in relation to the form factor of a desktop computer, although in other embodiments it is to be understood that the teachings herein can be applied to desktop web-browser applications. As will be explained further below, web-browser application 82 is configured to render web pages on the relatively small display of client machine 54, and during such rendering attempt to render those pages in a format that, as much as possible, is substantially the same as if those web pages had been rendered on a full browser such as Internet Explorer^{®} or Firefox^{®} on a traditional desktop or laptop computer. Web-browser application 82 thus provides basic hyper text markup language (HTML) and other web-browsing capability, such as Java script, although subject to features provided herein which can obviate or reduce the need for use of Java script. In general, client machine 54 is configured to interact with content available over network 66, including web content on web server 58 and web server 62 via web-browser application 82.

Application switcher application 84 is configured to be accessible from a menu during execution of browser application 82, telephone application 86, calendar application 88 or any other application executing on processor 208 and output from which is being generated on display 224.

Telephone application 86 is configured to provide telephony functionality for client machine 54, while calendar application 88 is configured to provide calendaring functionality for device 54.

Returning again to Figure 1, web server 58 is configured to host a first web page 94, and second web server 62 is configured to host a second web page 96. Web page 94 and web page 96 can each be accessed by web-browser 82. Web-browser 82 is also configured to allow both web page 94 and web page 96 to be accessed simultaneously by client machine 54, with the ability to alternate between generation of each on display 224, as will be discussed further below.

Web server 58 and second web server 62 (which can, if desired, be implemented on a single server) can be based on any well-known server environment including a module that houses one or more central processing units, volatile memory (e.g. random access memory), non-volatile or persistent memory (e.g. hard disk devices) and network interfaces to allow servers 58 and 62 to communicate over network 66. For example, server 58 or server 62 or both can be a Sun Fire V480 running a UNIX operating system, from Sun Microsystems, Inc. of Palo Alto Calif., and having four central processing units each operating at about nine-hundred megahertz and having about sixteen gigabytes of random access memory.

However, it is to be emphasized that this particular server is merely exemplary, and a vast array of other types of computing environments for servers 58 and 62 are contemplated.

It should now be understood that the nature of network 66 and the links 70, 74 and 78 associated therewith are not particularly limited and are, in general, based on any combination of architectures that will support interactions between client machine 54 and servers 58 and 62. In a present embodiment network 66 itself includes the Internet as well as appropriate gateways, routers and backhauls to links 70, 74 and 78. Accordingly, the links 70, 74 and 78 between network 66 and the interconnected components are complementary to functional requirements of those components.

More specifically, link 70 between client machine 54 and network 66 can be based in a present embodiment on core mobile network infrastructure (e.g. Global System for Mobile communications ("GSM"); Code Division Multiple Access ("CDMA"); CDMA 2000; 3G; Evolution-Data Optimized ("EV-DO"), Universal Mobile Telecommunications System ("UMTS"), High Speed Packet Access ("HSPA")) or on wireless local area network ("WLAN") infrastructures such as the Institute for Electrical and Electronic Engineers ("IEEE") 802.11 Standard (and its variants) or Bluetooth^{®} or the like or hybrids thereof. Note that in an exemplary variation of system 50 it is contemplated that client machine 54 could be other types of client machines whereby link 70 is a wired connection.

Link 74 can be based on a T1, T3, 03 or any other suitable wired or wireless connection between server 58 and network 66. Link 78 can be based on a T1, T3, 03 or any other suitable wired or wireless connection between server 62 and network 66.

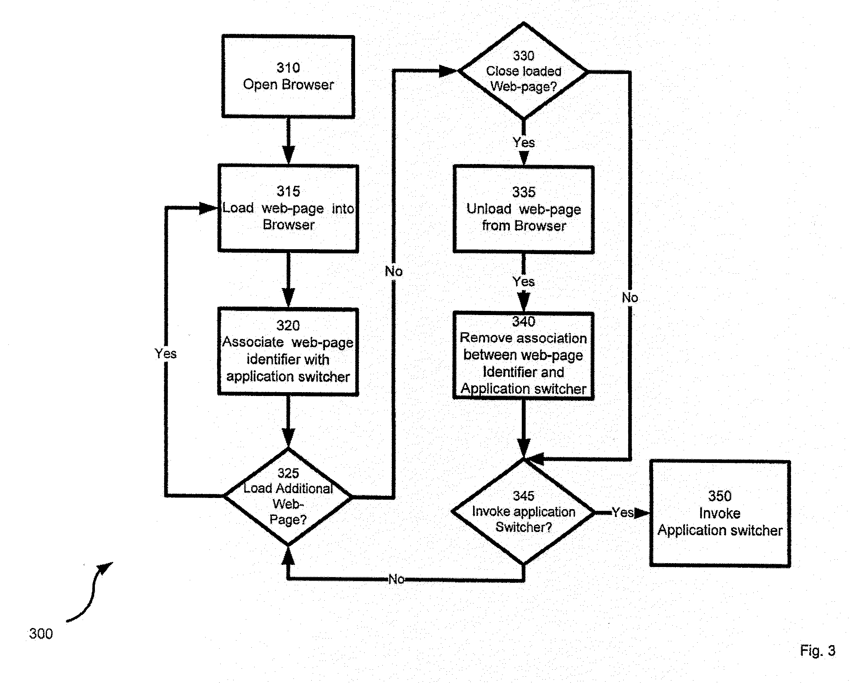

Referring now to Figure 3, a method for management of application switching in an electronic device is provided in the form of a flow-chart indicated generally at 300. Method 300 will be explained in conjunction with its exemplary performance on system 50, but it should be understood that system 50 and method 300 can both be varied within the scope of the present teachings. For example, the method 300 need not performed in the exact sequence as presented in Figure 3.

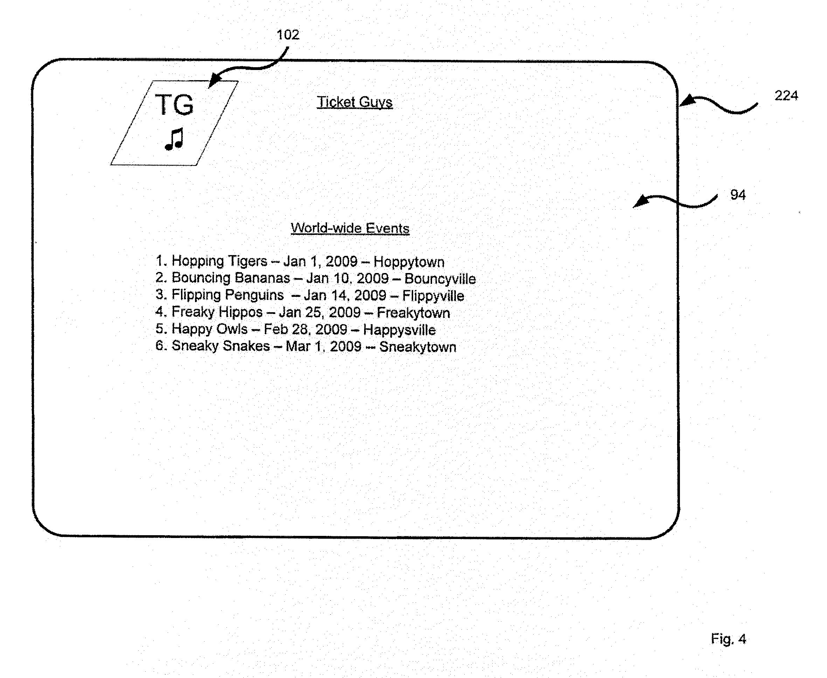

To help further explain method 300, and system 50, a specific, simplified, but non-limiting example of web page 94 and web page 98 and are provided. Figure 4 shows web page 94 from a hypothetical web-site hosted on server 58 by an organization referred to as "Ticket Guys". The web-site on server 58 is dedicated to providing event listings and selling tickets to events worldwide. The web-site on server 58 also includes a favicon 102 shown in Figure 4.

(As known to those skilled in the art, favicon is short for "favorites icon". A favicon generally refers to an icon associated with a particular website or webpage, and a web designer can create such an icon and install it into a website (or webpage) by several means, and most graphical web browsers can make use of it. Browsers that provide favicon support typically display a page's favicon in the browser's uniform resource locator (URL) bar and next to the page's name in a list of bookmarks. Browsers that support a tabbed document interface typically show a page's favicon next to the page's title.)

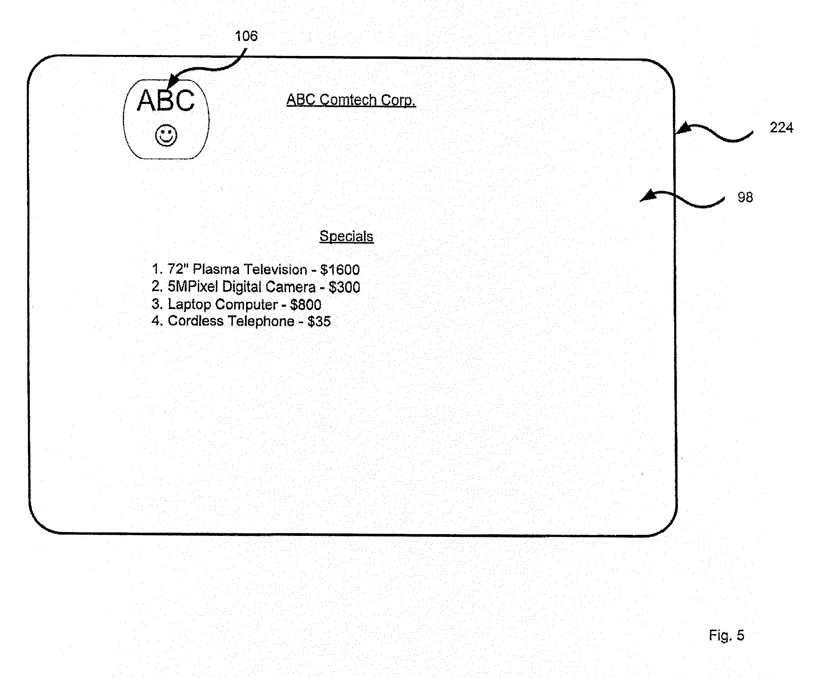

Figure 5 shows web page 96 from a hypothetical web-site hosted on server 62 by an organization referred to as "ABC Comtech Corp." The web-site on server 58 is dedicated to selling electronic equipment. The web-site on server 58 also includes a favicon 106 shown in Figure 5.

Block 310 comprises opening a web-browser. In system 50, block 310 is performed by client machine 54 via web-browser application 82, by loading and executing web-browser application 82 on processor 208.

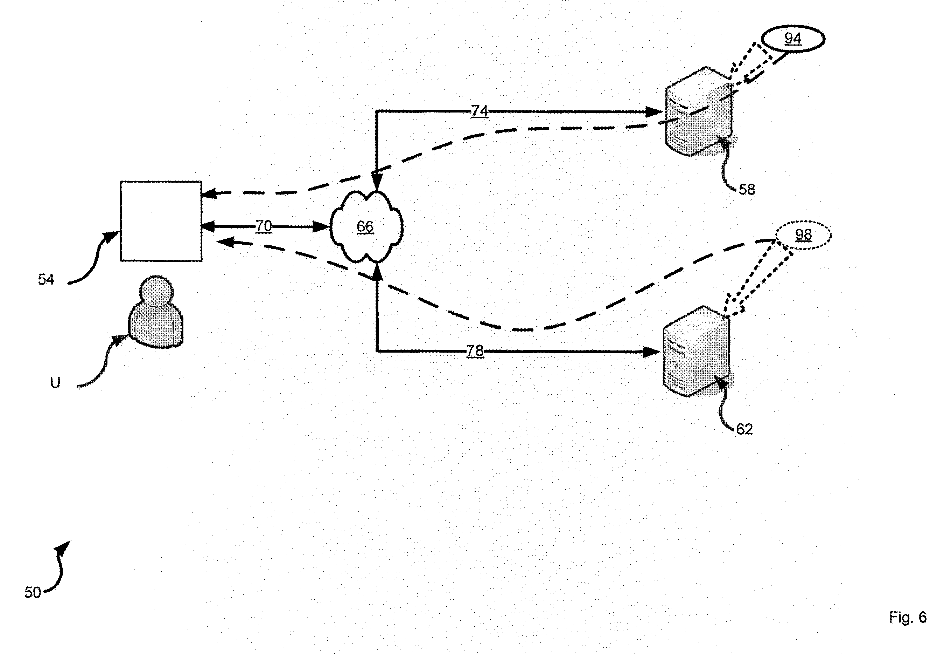

Block 315 comprises loading a web page into the browser. In system 50, block 315 is performed by client machine 54 via web-browser application 82, which accesses web page 94 via network 66 from server 58 in the usual manner. Exemplary performance of block 315 is represented in Figure 6 as web page 94 is shown as being accessed by client machine 54 using web-browser application 82 and downloaded to client machine 54. On completion of performance of block 315, display 225 will generate the "Ticket guys" web page 94 as shown in Figure 4.

Block 320 comprises associating a web page identifier with an application switcher application. In system 50, block 320 is performed by client machine 54 which extracts favicon 102 from web page 94 and stores favicon 102 in memory (e.g. storage 212 or storage 216 or both) in such a manner that application switcher application 84 is associated with favicon 102. As part of block 320, application switcher application 84 creates an association with the instance of loaded web page 94, as will be discussed further below.

Block 325 comprises determining if there is a request to load additional web pages. Block 325 can be effected by web-browser 82 receiving an instruction to load another web page in addition to web page 94. If a "yes" determination is made then method 300 cycles back to block 315, at which point the additional web page is loaded in the same manner as previously described.

Exemplary performance of block 315 during this cycle is represented in Figure 6 as web page 98 is shown as being accessed by client machine 54 using web-browser application 82 and downloaded to client machine 54. On completion of this performance of block 315, display 225 will generate the ABC Comtech Corp web page 98 as shown in Figure 5.

As previously discussed, block 320 comprises associating a web page identifier with the application switcher application. During this cycle of block 320, client machine 54 extracts favicon 106 from web page 98 and stores favicon 106 in memory (e.g. storage 212 or storage 216 or both) in such a manner that application switcher application 84 is associated with favicon 106. As part of block 320 application switcher application 84 creates an association with the instance of web-browser 82 as having loaded web page 98, as will be discussed further below.

Continuing with the exemplary performance, during this cycle through block 325, it will be assumed that a "no" determination is made in response to the determination as to whether to load additional web pages. Thus, block 330 comprises a determination as to whether to close any of the loaded web pages. A "yes" determination can be made based on receiving any known command at client machine 54, such as a selection of a "close" command, or the like, within a menu application that can be generated on display 224.

A "yes" determination at block 330 leads to block 335 which comprises unloading the web page selected for closure from the web-browser. Block 335 can be effected by, in substance, reversing the performance of block 315 corresponding to the web page selected for closure. Block 340 comprises removing the association between the web page selected for closure and the application switcher application. Block 340 can be effected by, in substance, reversing the performance of block 320 corresponding to the web page selected for closure.

Block 345 can be reached directly from block 340 or from a "no" determination at block 330. Block 345 comprises determining if the application switcher application has been invoked, and a "yes" determination leads to invocation of the application switcher application at block 350, whereas a "no" determination at block 345 causes method 300 to move from block 345 to block 325. Processor 200 can be instructed to invoke application switcher application 200 in a variety of manners. For example, such instruction to processor 200 can be effected via any desired configuration of user input, such as a hotkey on keyboard 200, or clicking on a menu key on keyboard 200 which results in the generation of a menu list.

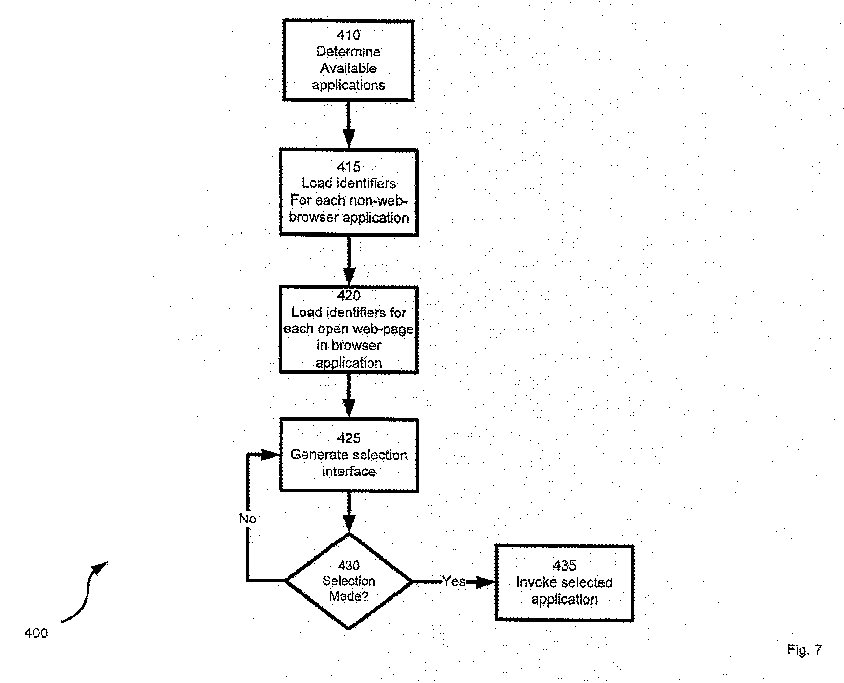

Figure 7 shows a flow-chart depicting a method for performing an application switcher application and indicated generally at 400. Method 400 is an example of an application switcher application that can be used to implement application switcher application 84. Method 400 can be invoked at block 350 of method 300 or in any other context on client machine 54 that is associated with a command at processor 208 to invoke application switcher application 84.

Block 410 comprises determining available applications. Block 410 can be based on an examination of processor 208 to determine which applications in client machine 54 are actually running on processor 208, or block 410 can be based on an examination of non-volatile storage 212 to determine the full list of available applications that can be run on processor 208, or both.

Block 415 comprises loading identifiers for each non-web-browser application that was identified as being available at block 410. In the present example, block 415 can comprise loading a telephone icon associated with telephone application 86, and a calendar icon associated with calendar application 88.

Block 420 comprises loading identifiers for each open web page in the browser application. If no web pages are open then no identifiers are loaded. However, continuing the example discussed in relation to method 300 and Figure 4 and Figures 5, block 420 includes loading favicon 102 and favicon 106 since web page 94 is open, and web page 96 is open.

Block 425 comprises generating a selection interface on display 224 that permits viewing and selection of available applications which can be accessed and "switched to" directly using application switcher application 84.

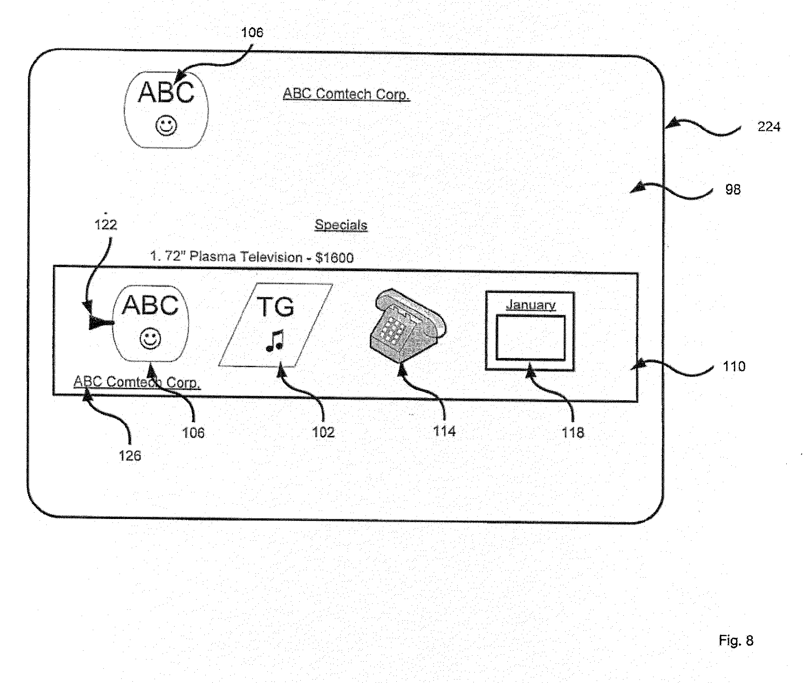

Assuming that application switcher application 84 is activated from web page 98 as shown in Figure 5, then at block 425 an exemplary application switcher dialogue box 110 can be generated on display 224 over web page 98 as shown in Figure 8. Dialogue box 110 which is generated by application switcher application 84, includes favicon 106, favicon 102, telephone icon 114 and calendar icon 118. Recall that favicon 106 is associated with web page 98 while favicon 102 is associated with web page 96. Note that both favicon 106 and favicon 102 are associated with a single application, namely web-browser application 82. Telephone icon 114 is associated with telephone application 86, while calendar icon 118 is associated with calendar application 88. Dialogue box 110 also includes an application selection indicator 122, and a selected application identifier 126. In Figure 8, selection indicator is pointing to favicon 106, and selected application identifier 126 optionally displays a text label, e.g. the name "ABC Comtech Corp." to correspond with the name of web page 98. Optionally, an audio file can also be played, e.g. the spoken text "ABC Comtech Corp.", or a chime.

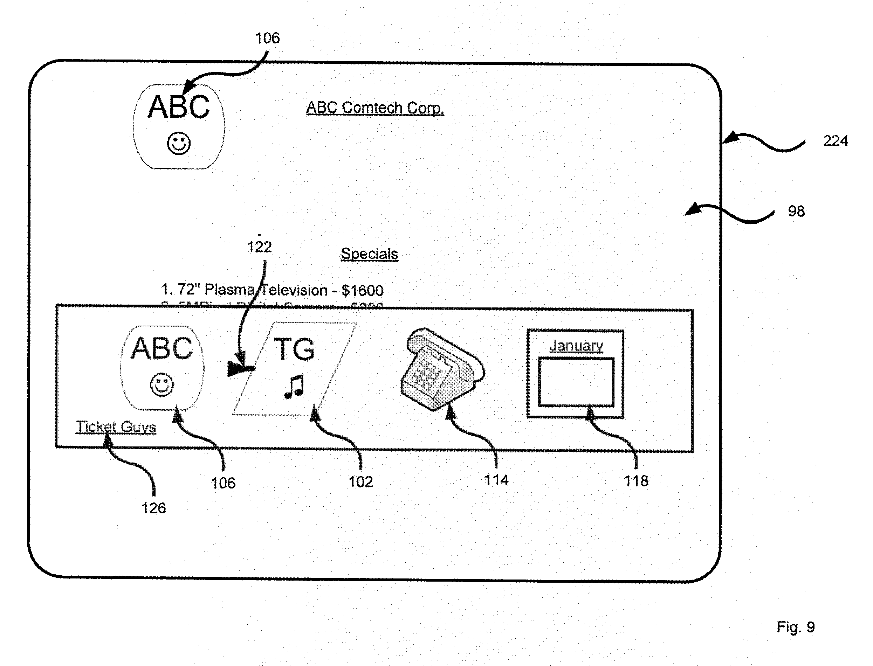

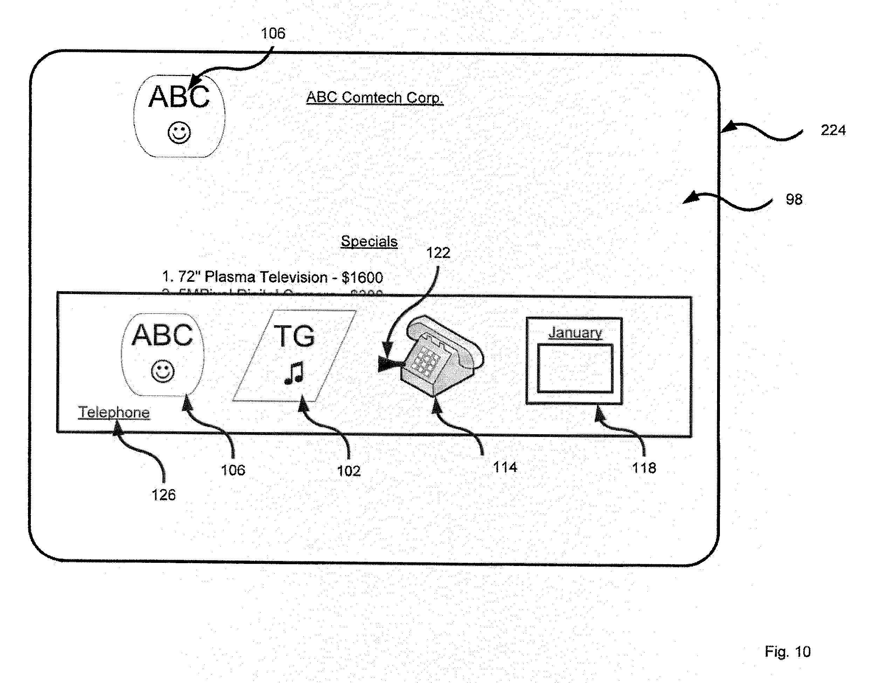

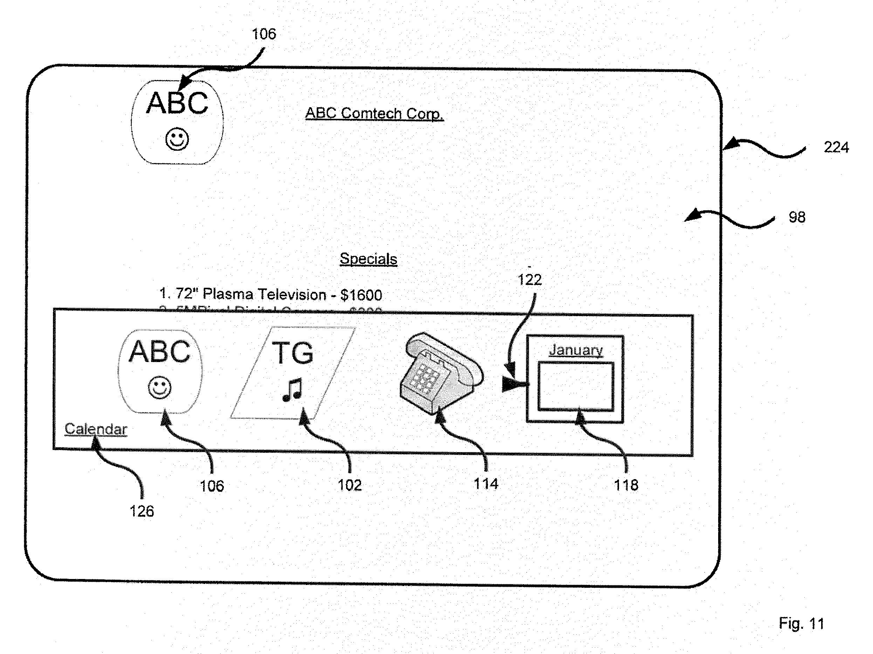

As part of block 425, input from pointing device 202 can be received to move selection indicator 122 to different icons, and cause selected application identifier 126 to recite "ABC Comtech Corp.". Figure 9 represents movement of selection indicator 122 from favicon 106 to favicon 102, so that the web-site "Ticket guys" is recited in selected application identifier 126. Figure 10 represents movement of selection indicator 122 from favicon 102 to telephone icon 114, so that the application "Telephone" is recited in selected application identifier 126. Figure 11 represents movement of selection indicator 122 from telephone icon 114 to calendar icon 118, so that the application "Calendar" is recited in selected application identifier 126.

Block 430 comprises determining if a selection has been made. A "yes" determination can be based on an affirmative input received at keyboard 200 or pointing device 202 while selection indicator 122 is at one of the positions shown in any of Figure 8, Figure 9, Figure 10 or Figure 11. Such an affirmative input is, in certain contexts, referred to as "clicking" on a selection. If a "no" determination is made at block 430 then method 400 cycles back to block 425. If a "yes" determination is made at block 430 then method 400 moves to block 435 and the selected application is invoked.

If a "yes" determination is made at block 430 while selection indicator 122 is at the position shown in Figure 9, then, at block 435, web browser application 82 will be invoked and showing web page 94, as shown in Figure 4.

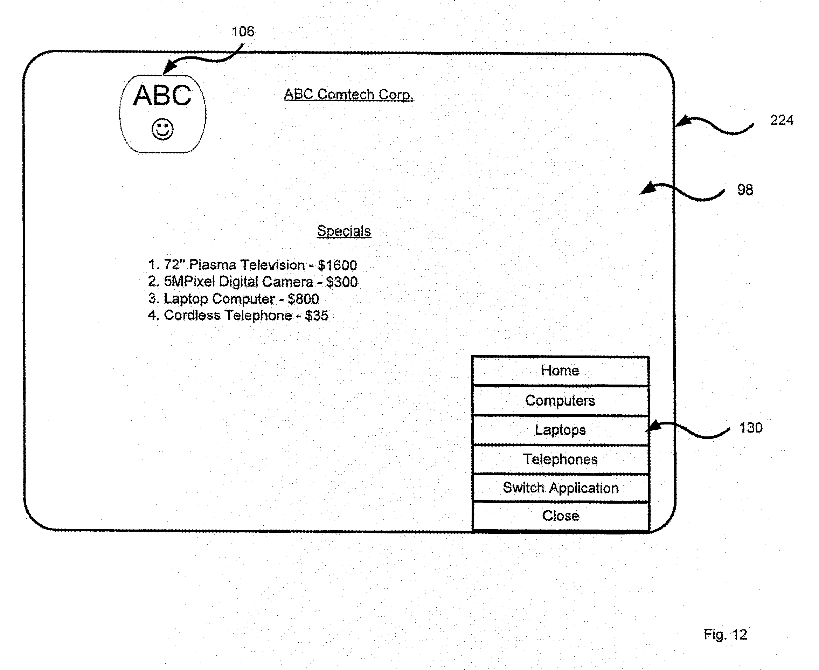

As discussed earlier, processor 208 can be instructed to invoke application switcher application 84 in a variety of manners. One specific way of effecting such instructions is via a menu application which is invoked by selecting a designated "menu" key on keyboard 200. As a result of depressing that menu key, a menu 130 of the exemplary form shown in Figure 12 can be generated on display 224 above active web page. The "Switch Application" item can be selected from menu 130 via user input from keyboard 200 or pointing device 202 or both, and thereby instruct processor 208 to invoke the application switcher application as contemplated by method 400.

Various advantages will now be explained. Browser application 82 can be easily alternated between two or more web pages via application selection application 84. Application selection application 84 can be dynamically updated, so that upon invocation of application selection application 84 lists the various open web pages within the web-browser application 82, in addition to the other available applications on client machine 54. This functionality can be extended to other applications, other than web-browser application, that open instances of themselves in an analogous fashion to that described herein in relation to web-browser 82. As a further example, when several web pages are open, application selection application 84 facilitates quick and easy differentiation between the various web pages. A user can quickly distinguish the several open web pages based on the appearance of their differing identifiers. This can reduce the frustration and inefficiency associated with manually clicking or otherwise switching to each open web page in a trial-and-error fashion until the user finally finds the desired web page that he or she is trying to switch to. Further, the generation of a favicon is a more readily identifiable than a thumbnail of a particular web-page.

One technical effect of such an improvement is that while processor 208 and storage 212 or storage 216 or both are now caused to manage a plurality of favicons as part of the application switcher application, correspondingly processor 208 is not consequently caused to blindly switch between each of a plurality of open web pages until a desired web page is generated on display 224, thereby reducing the application switching burden on processor 208 and the associated resource hardware burdens of accessing storage 212 and 216, and the corresponding hardware burdens of generating corresponding contents on display 224. Indeed, the application switching burden on processor 208 can be reduced to only a single application switch and therefore only a single invocation of an application switcher application to effect a desired application or web page switch. With reduction in such burden on processor 208, storage 212 and 216, and display 224, there is a concurrent reduction of battery drain.

Those skilled in the art are to understand that subsets, combinations and variations of the foregoing are contemplated. The claims attached hereto define the scope of the monopoly sought.

## Claims

1. A computing device configured for application switching comprising:
storage configured to maintain a web-browser application, an application switcher application and at least another application;
at least one processor connected to said storage and configured to execute said web-browser application and said at least another application; said at least another application having an application identifier;
a display connected to said at least one processor and configured to generate web pages via said web-browser application and to generate said at least another application; and
an interface connected to said processor;
said processor configured to access, via said interface, at least one web-site comprising a plurality of web pages maintained by at least one web-server; each of said web-sites having a different web page identifier;
said processor configured to associate each of said web page identifiers with said application switcher application; and,
said processor configured to associate said at least another application identifier with said application switcher application, such that upon invocation of said application switcher application each of said web page identifiers and said at least one another application identifier are generated on said display.

2. The computing device of claim 1 wherein said processor is further configured to receive, via an input device of said computing device, a selection of one of said web page identifiers and said application identifier; and said processor is further configured to invoke said web page or said application corresponding to said selection in said processor.

3. The computing device of claim 1 or claim 2 wherein said web browser application comprises a mini-browser application.

4. The computing device of any one claims 1-3 wherein said invoking of said application switching application occurs after receipt of an instruction received at said input device.

5. The computing device of any one of claims 1-4 wherein each web page identifier comprises a favicon.

6. The computing device of any one of claims 1-5 wherein said storage comprises at least one of non-volatile storage and volatile storage.

7. The computing device of any one of claims 1-6 wherein said another application comprises one or more of a telephone application and a calendar application.

8. A method of managing application switching in a computing device, the method comprising:
loading a plurality of web pages into storage of said computing device; each of said web pages having a different web page identifier;
associating, using a processor in said computing device, each web page identifier with an application switcher application maintained in said storage of said computing device; and,
associating, using said processor, at least another application identifier respective to another application, with said application switcher application;
invoking said application switcher application in said processor; and,
generating, using said processor, each of said web page identifiers and said another application identifier.

9. The method of claim 8 further comprising:
receiving, via an input device of said computing device, a selection of one of said web page identifiers and said application identifier; and
invoking said web page or said application corresponding to said selection in said processor.

10. The method of claim 8 or claim 9 wherein said loading of said plurality of web pages or said invoking said web-page is effected via a web browser application executing on said processor.

11. The method of claim 10 wherein said web browser application comprises a mini-browser application.

12. The method of any one of claims 8-11 wherein said invoking of said application switching application occurs after receipt of an instruction received at said input device.

13. The method any one of claims 8-12 wherein each web page identifier comprises a favicon.

14. The method of any one of claims 8-13 wherein said another application comprises one or more of a telephone application and a calendar application.

15. A computer readable medium for maintaining a plurality of programming instructions for a processor of a computing device such that when executed said said programming instructions configure said processor to perform a method of managing application switching on said computing device; said method comprising a method according to any one of claims 8-14:

## Amended claims

### Amended claims in accordance with Rule 137(2) EPC.

**1.** A computing device (54) configured for application switching comprising:
storage configured to maintain a web-browser application (82), an application switcher application (84) and at least another application (86, 88);
at least one processor connected to said storage and configured to execute said web-browser application (82) and said at least another application (86, 88); said at least another application (86, 88) having an application identifier;
a display connected to said at least one processor and configured to generate web pages via said web-browser application (82) and to generate said at least another application (86, 88); and
an interface connected to said processor;
said processor configured to access, via said interface, at least one web-site comprising a plurality of web pages maintained by at least one web-server; each of said webpages having a different web page identifier;
said processor configured to associate each of said web page identifiers with said application switcher application (84); and,
said processor configured to associate said at least another application (86,88) identifier with said application switcher application (84), such that upon invocation of said application switcher application (84), said processor then becomes configured to load each of said web page identifiers and to load said at least one another application identifier and to generate each of said web page identifiers and said at least one another application identifier on said display for individual selection and invocation.

**2.** The computing device of claim 1 wherein said processor is further configured to receive, via an input device of said computing device, a selection of one of said web page identifiers and said application identifier; and said processor is further configured to invoke said web page or said application corresponding to said selection in said processor.

**3.** The computing device of claim 1 or claim 2 wherein said web browser application (82) comprises a mini-browser application.

**4.** The computing device of any one claims 1-3 wherein said execution of said application switching application (84) occurs after receipt of an instruction received at said input device.

**5.** The computing device of any one of claims 1-4 wherein each web page identifier comprises a favicon.

**6.** The computing device of any one of claims 1-5 wherein said storage comprises at least one of non-volatile storage and volatile storage.

**7.** The computing device of any one of claims 1-6 wherein said another application (86, 88) comprises one or more of a telephone application and a calendar application.

**8.** A method of managing application switching in a computing device (54), the method comprising:
executing a web browser application (82);
loading a plurality of web pages into storage of said computing device via said web browser application (82); each of said web pages having a different web page identifier;
executing at least one another application (86, 88);
associating, using a processor in said computing device (54), each web page identifier with an application switcher application (84) maintained in said storage of said computing device (54); and,
associating, using said processor, at least another application identifier respective to said another application (86, 88), with said application switcher application (84);
invoking said application switcher application (84) in said processor; and, using said application switcher application (84):
loading said web page identifiers;
loading said at least another application identifier; and,
generating, from said application switcher application (84), using said processor, each of said web page identifiers and said another application identifier.

**9.** The method of claim 8 further comprising:
receiving, via an input device of said computing device, a selection of one of said web page identifiers and said application identifier; and
invoking said web page or said application corresponding to said selection in said processor.

**10.** The method of claim 8 or claim 9 wherein said loading of said plurality of web pages or said invoking said web-page is effected via a web browser application (82) executing on said processor.

**11.** The method of claim 10 wherein said web browser application (82) comprises a mini-browser application.

**12.** The method of any one of claims 8-11 wherein said invoking of said application switching application (84) occurs after receipt of an instruction received at said input device.

**13.** The method any one of claims 8-12 wherein each web page identifier comprises a favicon.

**14.** The method of any one of claims 8-13 wherein said another application comprises one or more of a telephone application (86) and a calendar application (88).

**15.** A computer readable medium for maintaining a plurality of programming instructions for a processor of a computing device such that when executed said programming instructions configure said processor to perform a method of managing application switching on said computing device (54); said method comprising a method according to any one of claims 8-14.
